(19) Europäisches Patentamt
European Patent Office
Office européen des brevets

(11) Veröffentlichungsnummer : **0 041 478**
**B1**

(12) **EUROPÄISCHE PATENTSCHRIFT**

(45) Veröffentlichungstag der Patentschrift : **28.12.83**

(51) Int. Cl.³ : **C 09 B 67/54**, C 09 B 67/10, C 09 B 67/48

(21) Anmeldenummer : **81810199.0**

(22) Anmeldetag : **25.05.81**

(54) **Verfahren zur Konditionierung eines Azopigments und dessen Verwendung.**

(30) Priorität : **30.05.80 CH 4230/80**

(43) Veröffentlichungstag der Anmeldung : **09.12.81 Patentblatt 81/49**

(45) Bekanntmachung des Hinweises auf die Patenterteilung : **28.12.83 Patentblatt 83/52**

(84) Benannte Vertragsstaaten : **CH DE FR GB IT LI**

(56) Entgegenhaltungen :
**CH-A- 351 689**
**FR-A- 2 214 728**
**FR-A- 2 214 730**
**FR-A- 2 214 734**
**CHEMICAL ABSTRACTS, Band 93, Nr. 16, 20. October 1980, Seite 83, Zusammenfassung 151792f Columbus, Ohio, US**
**CHEMICAL ABSTRACTS, Band 90, Nr. 8, Februar 1979, Seite 83, Zusammenfassung 56430r Columbus, Ohio, US**
**CHEMICAL ABSTRACTS, Band 88, Nr. 22, 29. Mai 1978, Seite 98, Zusammenfassung 154417v Columbus, Ohio, US**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Patentabteilung Postfach**
**CH-4002 Basel (CH)**

(72) Erfinder : **Bäbler, Fridolin, Dr.**
**Nussbaumweg 19**
**CH-4123 Allschwil (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**EP 0 041 478 B1**

# Verfahren zur Konditionierung eines Azopigments und dessen Verwendung

Gegenstand der Erfindung ist ein Verfahren zur Konditionierung eines Azopigments durch alkalische Umfällung. Als Konditionierung von Pigmenten versteht man die Erzeugung einer gegenüber der Ausgangsform gröberen oder feineren Kristallform, eines anderen Kristallhabitus, einer neuen Kristallmodifikation oder einer veränderten Beschaffenheit der Pigmentoberfläche und damit die Erzielung von verbesserten Pigmenteigenschaften wie Dispergierbarkeit, Farbstärke, Transparenz, Deckkraft, Glanz, Echtheiten, Nuance und rheologische Eigenschaften.

Bisher erfolgte die Konditionierung von Pigmenten durch Mahlen oder Kneten in Gegenwart oder Abwesenheit von Salzen und/oder organischen Lösungsmitteln, durch Nachbehandlung, beispielsweise mit organischen Lösungsmitteln, Wasser enthaltend Tenside, flüssigem Ammoniak oder Aminen, durch Umfällung in Schwefelsäure oder durch alkalische Umfällung. In der CH-PS 351 689 wird ein Verfahren zur Herstellung von Lösungen von Azofarbstoffen beschrieben, die in wässrigen Bädern eine ungenügende Löslichkeit besitzen, von komplex gebundenem Metall frei sind und mindestens eine in Nachbarstellung zu einer Azogruppe befindliche Hydroxylgruppe aufweisen, indem diese Azofarbstoffe mit einer Base und einem polaren Mittel, das eine Dielektrizitätskonstante von mindestens 6 besitzt und weniger sauer als Aethylalkohol ist, behandelt werden. Zweck der Verwendung solcher Lösungen ist eine Vereinfachung der Applikation der Azofarbstoffe, wobei diese aus den applizierten Lösungen durch Behandeln mit Wasser oder verdünnten Säuren chemisch unverändert zur Ausscheidung gebracht werden.

Die JP-PS 52-128 923 (1977) beschreibt ein Verfahren zur Behandlung eines hydrophoben organischen Farbstoffs, der mindestens eine Imino-, Carbonyl-, Hydroxyl-, Methylen- oder Methingruppe als funktionellen Rest aufweist, mit einer Base, um mit dem Farbstoff in einem hydrophilen Lösungsmittel ein Salz zu bilden, welches durch Behandlung mit einem einen aktiven Methylen- oder Methinrest aufweisenden organischen Lösungsmittel unter Ausfällung des Farbstoffs wieder zersetzt wird. Zu den zu behandelnden Farbstoffen gehören insbesondere solche der Isoindolin-, Chinophthalon-, Acetoacetanilid-, Chinacridon-, Perylen- und der Azokondensations-Reihe, welche nach der Behandlung verbesserte Eigenschaften wie Dispergierbarkeit, Transparenz, Farbstärke und Glanz aufweisen sollen. Vor allem bei Azopigmenten trat aber nur eine geringe Verbesserung der Eigenschaften, wie der Farbstärke und Dispergierbarkeit, ein.

FR-A-2,214,730 und FR-A-2,214,728 beschreiben ein Verfahren zum Konditionieren eines Disazopigmentes, wobei das Pigment in einer alkalischen wässerigen Suspension erwärmt, mit Wasser neutral gewaschen und unter neutralen Bedingungen in einem organischen Lösungsmittel erwärmt wird.

Es wurde nun gefunden, dass man Azopigmente ausgezeichnet durch alkalische Umfällung und Erwärmung der sauern Pigmentsuspension konditionieren kann und dabei Azopigmente erhält, deren Pigmenteigenschaften, darunter besonders Farbstärke und Dispergierbarkeit, erhebliche Verbesserungen aufweisen. Die Erfindung betrifft somit ein Verfahren zur Konditionierung von Mono- oder Disazopigmenten der β-Hydroxynaphthoesäurearylid-, Acetoacetarylid- und der heterocyclischen Reihe, wie Pyridon- oder Pyrazolonpigmente, insbesondere aber von Disazopigmenten der β-Hydroxynaphthoesäurearylid- und Acetessigsäurearylidreihe, durch alkalische Umfällung, dadurch gekennzeichnet, dass man das Rohpigment in einem polaren organischen Lösungsmittel oder in einem Gemisch von solchen Lösungsmitteln durch Zugabe einer Base in ein Pigmentsalz überführt, das Azopigment durch Zugabe einer Säure wieder ausfällt, danach die saure Pigmentsuspension unter Rühren erwärmt und das erhaltene kristalline Pigment isoliert.

Zu den verwendbaren organischen Lösungsmitteln gehören vor allem Aethylenglykol-monoalkyläther, wie Aethylenglykol-monomethyläther oder Aethylenglykol-monoäthyläther, ferner Diäthylenglykol-monoalkyläther, wie Diäthylenglykol-monomethyläther oder Diäthylenglykol-monoäthyläther, aber auch Polyäthylenglykole, oder ferner Amide wie Dimethylformamid, N-Methylformamid. Formamid oder N-Methylpyrrolidon, oder gegebenenfalls Alkohole wie Methanol, Aethanol, Isopropanol, Aethylenglykol oder 1,2-Propylenglykol, oder gegebenenfalls Ketone, wie Aceton. Die genannten Lösungsmittel können rein oder als Gemisch eingesetzt werden. Die Alkohole, insbesondere Methanol, werden vorzugsweise auch in einer Mischung mit Mono- oder Diäthylenglykoldialkyläthern, wie Diäthylenglykol-diäthyläther, oder mit cyclischen Aethern, wie Dioxan oder Morpholin, eingesetzt.

Bevorzugte Basen sind Alkalihydroxide, wie Lithium-, Natrium- oder Kaliumhydroxid. In einigen Fällen sind auch Ammoniak oder organische Basen, wie prim.-, sek.- oder tertiäre Alkylamine, prim.-, sek.- oder tertiäre Alkanolamine, aliphatische Diamine wie Aethylendiamin, Natrium- oder Kaliumalkoholate, beispielsweise Natrium- oder Kaliummethylat oder -äthylat geeignet. Lösungsmittel und Base werden vorzugsweise in solchen Mengen verwendet, dass sich das Pigment vollständig auflöst.

Als Säure werden vorzugsweise gasförmige Halogenwasserstoffe, insbesondere Chlorwasserstoff, verwendet. Daneben lassen sich wässrige anorganische Säuren, wie verdünnte Schwefelsäure oder verdünnte oder konzentrierte Salzsäure verwenden. Letztere erfordern jedoch infolge des Wassergehaltes eine wesentlich längere Rückflusszeit vor dem Isolieren des Pigments. Organische Säuren wie Ameisensäure, Essigsäure, Oxalsäure, Halogenessigsäuren, wie Mono-, Di- oder Trichloressigsäure, oder 2-Aethylcapronsäure können ebenfalls zum Fällen der Pigmente verwendet werden, erfordern aber eine

aufwendigere Lösungsmittelregeneration.

Das Ausrühren der sauren Pigmentsuspension erfolgt vorteilhafterweise bei Temperaturen von 80-250 °C, im Idealfall bei Rückflusstemperatur, gegebenenfalls unter Druck im Autoklaven. Dabei wird je nach Pigment und Lösungsmittel während einiger Minuten bis zu mehreren Stunden, vorzugsweise 1-8 Stunden, gerührt.

Das Azopigment bildet mit der meist etwas im Ueberschuss verwendeten Base ein Pigmentsalz, welches bevorzugt in gelöstem Zustand vorliegt. In der Regel löst sich das Pigment unter Rühren mit der Base im Lösungsmittel bei Raumtemperatur auf. Sofern sich das Pigment nicht unter Zersetzung verändert, kann die Lösung auch bei etwas höherer Temperatur hergestellt werden.

Das Ausfällen des Pigmentes mittels Säure kann entweder durch Zugabe der Säure zur alkalischen Pigmentsalzlösung oder durch Einfliessenlassen der alkalischen Pigmentsalzlösung in die vorgelegte Säure in einer geringen Menge Lösungsmittel erfolgen. Die erhaltene Pigmentsuspension muss für die anschliessende Wärmebehandlung in saurem Zustand vorliegen, wobei der eingestellte pH-Wert von 1,0-6,5 je nach ausgefälltem Pigment und der Menge an vorhandenem Lösungsmittel und Wasser einen Einfluss auf die Konditionierung ausüben kann. Nach der Wärmebehandlung wird die Pigmentsuspension abfiltriert und mit Lösungsmittel und Wasser salzfrei gewaschen und getrocknet.

Die Zugabe von Additiven, beispielsweise Dispergatoren, wie Polyäthylenglykoläther, Fettsäuren, Kolophoniumseife, Anlagerungsprodukten von Oxiranen, besonders Aethylenoxid, an höhere Fettsäuren, oder Alkylammoniumverbindungen, wie Alkylammoniumpolyäthylenglykoläther, kann zusätzlich einen positiven Konditioniereffekt bewirken. Vorzugsweise verwendet man solche Additive, welche beim Ausfällen des Pigments mit Säure mitausgefällt werden.

Bei der Anwendung des Verfahrens kann vom trockenen Pigment in Pulverform oder auch direkt vom in der Synthese anfallenden lösungsmittelfeuchten Presskuchen ausgegangen werden, wobei die Anwesenheit von Spuren an aromatischem Lösungsmittel nicht störend wirkt.

Nach dem erfindungsgemässen Verfahren lassen sich je nach Art des Azopigments, der verwendeten Lösungsmittel, der Zeitdauer, Temperatur und des Drucks der anschliessenden Wärmebehandlung die Pigmente in eine grobkristalline, deckende oder sehr feinkristalline, farbstarke, transparente Form überführen. Ueberraschend ist, dass z. B. gewisse β-Hydroxynaphthoesäurearylidpigmente trotz der anschliessenden Wärmebehandlung der sauren Pigmentsuspension nur geringfügig vergröbert werden, also eine hohe Farbstärke beibehalten, jedoch im Vergleich zu einem ohne nachträgliche Wärmebehandlung ausgefällten Pigment eine bedeuten bessere Dispergierbarkeit aufweisen.

In gewissen Fällen gelingt es nach dem erfindungsgemässen Verfahren, Pigmente in derselben Kristallmodifikation aber mit einem gegenüber der Ausgangsform anderen Kristallhabitus mit besseren applikatorischen Eigenschaften zu erzeugen. Manchmal kann zudem beim alkalischen Ausfällen ein erwünschter Kristallmodifikationswechsel auftreten.

Ein weiterer Vorteil der nach dem erfindungsgemässen Verfahren umgefällten Produkte besteht in der Möglichkeit, die erhaltenen feinkristallinen Azopigmente ohne weitere mechanische Teilchengrössenveränderung direkt ausgehend vom Filterkuchen z. B. über den Flushprozess, zu Pigmentpräparaten zu verarbeiten.

Bestimmte Farbnuancen oder auch Pigmente mit spezifischen Eigenschaften können durch die Umfällung von Pigmentmischungen erhalten werden. Der Umfällprozess stellt im übrigen zugleich einen Reinigungsprozess für Azopigmente dar, indem die erfindungsgemäss umgefällten Pigmente gegenüber den Ausgangspigmenten reinere Ausfärbungen ergeben.

Ueberraschend ist, dass die nach dem erfindungsgemässen Verfahren umgefällten, in sehr feinkristalliner Form erhaltenen Pigmente ebenso gute oder sogar verbesserte Echtheiten gegenüber der grobkristallinen Ausgangsform aufweisen.

Die nach dem erfindungsgemässen Verfahren erhaltenen Azopigmente eignen sich zum Pigmentieren von hochmolekularem organischem Material, thermoplastischen und duromeren Kunststoffen, wie Celluloseäther und -ester, wie Aethylcellulose, Nitrocellulose, Celluloseacetat, Cellulosebutyrat, natürlichen Harzen oder Kunstharzen, wie Polymerisationsharzen, Polyadditions- oder Kondensationsharzen, z. B. Aminoplasten, insbesondere Harnstoff- und Melamin-Formaldehydharzen, Alkydharzen, Phenoplasten, Polycarbonaten, Polyolefinen, wie Polyäthylen, Polypropylen, Polystyrol, Polyvinylchlorid, Polyacrylnitril, Polyacrylsäureester, Polyamiden, Polyurethanen oder Polyester, Gummi, Casein, Silikon und Silikonharzen, einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

In den nachfolgenden Beispielen stellen die Teile, wenn nicht anders angegeben, Gewichtsteile dar, und bedeuten die Temperaturangaben Celsiusgrade.

## Beispiel 1

30 Teile des nach dem Verfahren gemäss CH-PS 297 020 erhaltenen rohen C.I. Pigmentrots 144 und 6 Teile ca. 100 %-iges Aetznatron in Pillenform werden in 370 Vol.-Teilen Aethylenglykolmonomethyläther

eingerührt und bei Raumtemperatur solange gerührt, bis sich das Pigment und das Aetznatron vollständig im Lösungsmittel aufgelöst haben. Nach ca. 2 Stunden bildet sich eine blauviolette Lösung. Während ca. 10 Minuten wird nun kontinuierlich Chlorwasserstoffgas in die Lösung eingeleitet, bis das Pigment ausfällt und die Pigmentsuspension sauer ist. Die Temperatur steigt dabei auf 40-45° an. Die saure Pigmentsuspension wird danach auf Rückflusstemperatur erwärmt und während zwei Stunden bei Rückfluss gerührt. Dann wird die immer noch saure Pigmentsuspension bei 70-90° abfiltriert, der Presskuchen zuerst mit 500 Vol.-Teilen Aethylenglykolmonomethyläther, dann mit Wasser salzfrei gewaschen, bei ca. 80° im Vakuumtrockenschrank getrocknet und pulverisiert. Man erhält ein Pigment, welches eingefärbt in Weich-PVC-Walzfolien gegenüber der Ausgangsware eine wesentlich farbstärkere reinere und transparentere Färbung mit ebenso guten Echtheiten ergibt. Elektronenmikroskopische Untersuchungen zeigen beim umgefällten Pigment im Vergleich mit der Ausgangsware einen wesentlich kleineren Pigmentkristall. Das umgefällte 100 %-ige Tonerpigment weist eine ausgezeichnete Dispergierbarkeit beim Einarbeiten in Kunststoffe auf.

Beispiel 2

30 Teile des nach dem Verfahren gemäss CH-PS 297 020 erhaltenen rohen C.I. Pigmentrots 144 und 6 Teile ca. 100 %-iges Aetznatron in Pillenform werden in 370 Vol.-Teilen Aethylenglykolmonomethyläther eingerührt und solange bei Raumtemperatur gerührt, bis sich das Pigment und das Aetznatron im Lösungsmittel vollständig aufgelöst haben.

In einem zweiten Rührgefäss werden 50 Vol.-Teile Aethylenglykolmonomethyläther unter Einleitung von Chlorwasserstoffgas auf 90-100° erwärmt. Innert ca. 20 Minuten lässt man die oben hergestellte alkalische Pigmentlösung bei 90-100° und unter HCl-Gaseinleitung in den vorgelegten Aethylenglykolmonomethyläther eintropfen. Die saure Pigmentsuspension wird dann ohne weitere Gaseinleitung weitere 20 Minuten bei Rückflusstemperatur weitergerührt und dann bei 70-90° abfiltriert. Der Presskuchen wird mit 500 Vol.-Teilen Aethylenglykolmonomethyläther, dann mit Wasser salzfrei gewaschen, im Vakuumtrockenschrank bei ca. 80° getrocknet und pulverisiert. Man erhält 28,8 Teile eines Pigments, welches, eingefärbt in Weich-PVC-Walzfolien, sehr farbstärkere, transparentere, reinere, gleichmässigere Färbungen mit guten Echtheiten ergibt.

Beispiel 3

30 Teile des nach dem Verfahren gemäss CH-PS 297 020 erhaltenen rohen C.I. Pigmentrots 166 und 6 Teile ca. 100 %-iges Aetznatron in Pillenform werden in 360 Vol.-Teilen Aethylenglykolmonomethyläther eingerührt und bei Raumtemperatur solange gerührt, bis sich das Pigment und das Aetznatron vollständig im Lösungsmittel aufgelöst haben. Nach ca. 2 Stunden bildet sich eine dunkelblauviolette Lösung. Innert ca. 10 Minuten wird kontinuierlich Chlorwasserstoffgas in die Lösung eingeleitet, bis das Pigment ausfällt und die Pigmentsuspension sauer ist. Die Temperatur steigt dabei auf 40-45° an. Die saure Pigmentsuspension wird ohne weitere HCl-Einleitung auf Rückflusstemperatur erwärmt und während 2 1/2 Stunden bei Rückflusstemperatur gerührt. Danach wird die immer noch saure Pigmentsuspension bei 70-90° abfiltriert, der Presskuchen zuerst mit 500 Vol.-Teilen Aethylenglykolmonomethyläther, dann mit Wasser salzfrei gewaschen, bei ca. 80° im Vakuumtrockenschrank getrocknet und pulverisiert. Man erhält 28,6 Teile eines Pigments, welches, eingefärbt in Weich-PVC-Walzfolien, sehr farbstarke, reine, gleichmässig transparente scharlachfarbene Färbungen mit guten Echtheiten ergibt. Elektronenmikroskopische Aufnahmen zeigen beim umgefällten Pigment im Vergleich zur Ausgangsware viel kleinere Pigmentkristalle.

Beispiel 4

20 Teile des roten Pigmentes der Formel

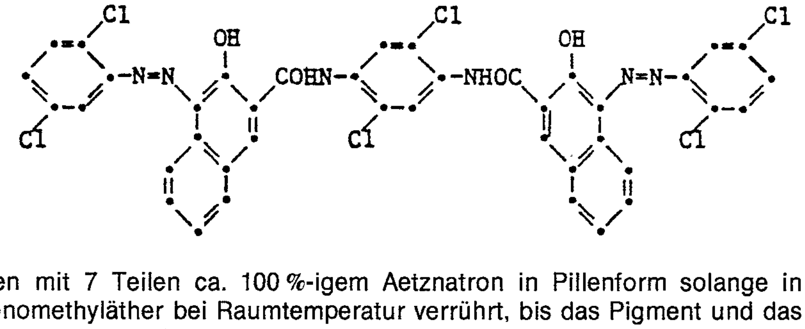

werden zusammen mit 7 Teilen ca. 100 %-igem Aetznatron in Pillenform solange in 250 Vol.-Teilen Aethylenglykolmonomethyläther bei Raumtemperatur verrührt, bis das Pigment und das Aetznatron sich vollständig im Lösungsmittel aufgelöst haben. Nach ca. 2 1/2 Stunden bildet sich eine dunkelrote Lösung. Innert ca. 10 Minuten leitet man kontinuierlich Chlorwasserstoffgas in die Lösung, bis das Pigment ausfällt und die Pigmentsuspension schwach sauer ist. Die Temperatur steigt dabei auf 40-45° an. Ohne

weitere Gaseinleitung wird die saure Pigmentsuspension auf Rückflusstemperatur erwärmt und während 5 Stunden bei Rückfluss gerührt. Die noch saure Pigmentsuspension wird danach bei 70-90° abfiltriert, der Presskuchen zuerst mit 300 Vol.-Teilen Aethylenglykolmonomethyläther, dann mit Wasser salzfrei gewaschen, bei ca. 80° im Vakuumtrockenschrank getrocknet und pulverisiert. Man erhält ein Pigment, welches, eingefärbt in Weich-PVC-Walzfolien, gegenüber der Ausgangsware eine wesentlich farbstärkere, reinere und transparentere Färbung mit guten Echtheiten ergibt.

Beispiel 5

Verfährt man analog wie in Beispiel 4 beschrieben, verwendet jedoch 20 Teile des scharlachroten Disazopigments der Formel

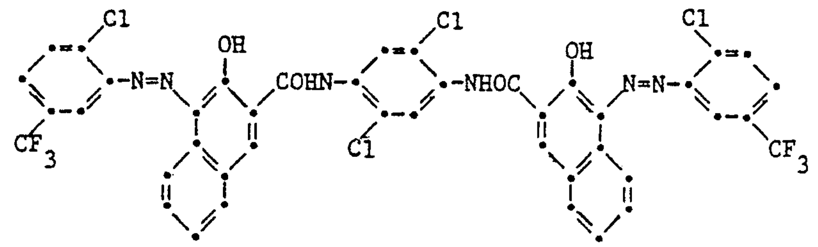

so erhält man 18,6 Teile eines Pigments, welches, eingefärbt in Weich-PVC-Walzfolien, sehr farbstarke, reine, gleichmässig transparente scharlachfarbene Färbungen mit guten Echtheiten ergibt.

Beispiel 6

Verfährt man analog wie in Beispiel 4 beschrieben, verwendet jedoch 20 Teile des braunen Disazopigmentes der Formel

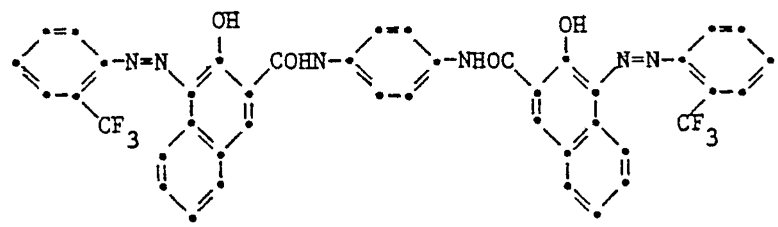

so erhält man 18,5 Teile eines Pigments, welches gegenüber der Ausgangsform beim Einfärben in Lacke und Kunststoffe wesentlich farbstärkere, reinere Braunfärbungen mit guten Echtheiten ergibt.

Beispiel 7

10 Teile des nach dem Verfahren gemäss CH-PS 297 020 erhaltenen rohen C.I. Pigmentrots 144 und 2 Teile ca. 100 %-iges Aetznatron in Pillenform werden innert ca. 1 Stunde durch Verrühren bei Raumtemperatur in 120 Vol.-Teilen N-Methylformamid vollständig aufgelöst. Während ca. 10 Minuten leitet man Chlorwasserstoffgas in die dunkelblauviolette Lösung, bis das Pigment ausgefallen und die Pigmentsuspension schwach sauer ist. Die saure Pigmentsuspension wird auf ca. 120° erwärmt und während 2 1/2 Stunden bei 110-120° verrührt. Die immer noch saure Pigmentsuspension wird dann bei 70-90° abfiltriert, der Presskuchen mit 150 Vol.-Teilen N-Methylformamid, danach mit Wasser salzfrei gewaschen, im Vakuumtrockenschrank bei ca. 80° getrocknet und pulverisiert. Man erhält 9 Teile konditioniertes Pigment, welches eingefärbt in Lacke und Kunststoffe, sehr farbstarke rote Färbungen mit guten Echtheiten ergibt.

Beispiel 8

Verfährt man analog wie in Beispiel 7 beschrieben, verwendet jedoch anstelle von 120 Vol.-Teilen N-Methylformamid 120 Vol.-Teile Dimethylformamid und rührt die mit Chlorwasserstoff gefällte saure Pigmentsuspension während 4 Stunden bei 100-105°, so erhält man ein rotes Pigment mit ebenso guten Eigenschaften.

Beispiel 9

Verfährt man analog wie in Beispiel 7 beschrieben, verwendet jedoch anstelle von 120 Vol.-Teilen N-Methylformamid 120 Vol.-Teile Aethylenglykolmonoäthyläther und rührt die mit Chlorwasserstoff gefällte saure Pigmentsuspension während 2 1/2 Stunden bei Rückflusstemperatur, so erhält man ein Pigment mit ebenso guten Eigenschaften.

Beispiel 10

10 Teile des nach dem Verfahren gemäss CH-PS 297 020 erhaltenen rohen C.I. Pigmentrots 166 und 2 Teile ca. 100 %-iges Aetznatron in Pillenform werden in 120 Vol.-Teilen Aethylenglykolmonomethyläther während 1 1/2 Stunden bei Raumtemperatur verrührt, wobei sich das Pigment und das Aetznatron vollständig im Lösungsmittel auflösen. In diese Lösung lässt man 7 Vol.-Teile 40 %-ige wässrige Schwefelsäure eintropfen. Dabei fällt das Pigment aus. Die saure Pigmentsuspension wird auf Rückflusstemperatur erwärmt und während 24 Stunden bei Rückfluss gerührt. Die noch saure Pigmentsuspension wird dann bei 70-90° abfiltriert, der Presskuchen zuerst mit 150 Vol.-Teilen Aethylenglykolmonomethyläther, dann mit Wasser salzfrei gewaschen, bei ca. 80° im Vakuumtrockenschrank getrocknet und pulverisiert. Man erhält 9,8 Teile eines Pigmentes, welches, eingefärbt in Lacke und Kunststoffe, beispielsweise Weich-PVC-Walzfolien,. gegenüber der Ausgangsware wesentlich farbstärkere, reine Färbungen hoher Transparenz, in Lacken hohem Glanz, mit guten Echtheiten ergibt.

Beispiel 11

Verfährt man analog wie in Beispiel 10 beschrieben, verwendet jedoch anstelle der 40 %-igen wässrigen Schwefelsäure 7 Vol.-Teile ca. 37 %-ige wässrige Salzsäure zum Fällen des Pigmentes und rührt die saure Pigmentsuspension während 20 Stunden bei Rückfluss, so erhält man ein Pigment mit ebenso guten Eigenschaften.

Beispiel 12

Verfährt man analog wie in Beispiel 10 beschrieben, verwendet jedoch anstelle von 2 Teilen Aetznatron 2,5 Teile ca. 85%-iges Aetzkali in Pillenform, fällt das Pigment anstelle von 40 %-iger Schwefelsäure mit Chlorwasserstoffgas und rührt die Pigmentsuspension während 4 Stunden bei Rückflusstemperatur, so erhält man ein Pigment mit ebenso guten Eigenschaften.

Beispiel 13

10 Teile des nach dem Verfahren gemäss CH-PS 297 020 erhaltenen rohen C.I. Pigmentrots 144 und 2 Teile ca. 100 %-iges Aetznatron in Pillenform werden in 120 Vol.-Teilen Aethylenglykolmonomethyläther während 2 Stunden bei Raumtemperatur verrührt, wobei sich das Pigment und das Aetznatron vollständig im Lösungsmittel auflösen. Durch Zutropfen von 10 Vol.-Teilen Ameisensäure wird das Pigment aus der Lösung wieder ausgefällt. Die saure Pigmentsuspension wird auf Rückflusstemperatur erwärmt, während einer Stunde bei dieser Temperatur gehalten und dann abfiltriert. Der Presskuchen wird zuerst mit 150 Vol.-Teilen Aethylenglykolmonomethyläther, dann mit Wasser salzfrei gewaschen, bei ca. 80° im Vakuumtrockenschrank getrocknet und pulverisiert ; man erhält 9,7 Teile eines Pigments, welches gegenüber der Ausgangsware beim Einfärben in Lacke und Kunststoffe, beispielsweise Weich-PVC-Walzfolien, Färbungen mit wesentlich höherer Farbstärke und Transparenz ergibt.

Beispiel 14

Verfährt man analog wie in Beispiel 13 beschrieben, verwendet jedoch anstelle der Ameisensäure Essigsäure zum Fällen des Pigments und rührt die saure Pigmentsuspension danach während 2 Stunden bei Rückflusstemperatur, so erhält man ein Pigment mit ebenso guten Eigenschaften.

Beispiel 15

Verfährt man analog wie in Beispiel 13 beschrieben, verwendet jedoch anstelle von Ameisensäure 22 Vol.-Teile 2-Aethylcapronsäure als Fällmittel und rührt die schwach saure Pigmentsuspension während 30 Minuten bei Rückfluss, so erhält man ein Pigment mit ebenso guten Eigenschaften.

Beispiel 16

Verfährt man analog wie in Beispiel 13 beschrieben, verwendet jedoch anstelle der Ameisensäure 35 Vol.-Teile 5 %-ige wässrige Salzsäurelösung zum Fällen des Pigmentes und rührt die schwach saure Pigmentsuspension während 20 Stunden bei Rückfluss, so erhält man ein Pigment mit ebenso guten Eigenschaften.

Beispiel 17

Verfährt man analog wie in Beispiel 1 beschrieben, verwendet jedoch anstelle von 30 Teilen C.I. Pigmentrot 144 eine Mischung aus 15 Teilen C.I. Pigmentrot 144 und 15 Teilen C.I. Pigmentrot 166, so erhält man ein Pigment, welches beim Einfärben in Weich-PVC-Walzfolien hochtransparente, sehr farbstarke, reine, gleichmässige Rotfärbungen mit guten Echtheiten ergibt.

Beispiel 18

10 Teile des nach dem Verfahren gemäss CH-PS 391 146 erhaltenen rohen roten Monoazopigments der Formel

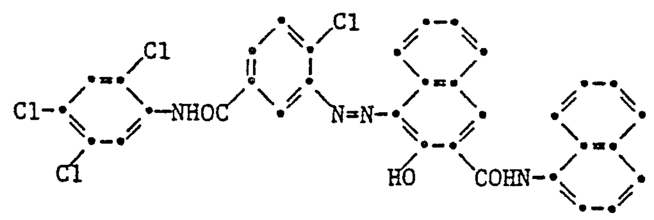

werden zusammen mit 2 Teilen ca. 100 %-igem Aetznatron in Pillenform durch Verrühren während ca. einer Stunde bei Raumtemperatur in 120 Vol.-Teilen Aethylenglykolmonomethyläther aufgelöst. In die dunkelrote Lösung leitet man hernach Chlorwasserstoffgas ein, bis das Pigment ausfällt und die Pigmentsuspension schwach sauer ist. Die braunrote saure Pigmentsuspension wird auf Rückflusstemperatur erwärmt und während 40 Minuten bei Rückfluss gerührt. Die Farbe der Suspension wird dabei wieder rot. Man filtriert bei 70-90° ab und wäscht den Presskuchen zuerst mit 150 Vol.-Teilen Aethylenglykolmonomethyläther, dann mit Wasser salzfrei und trocknet ihn bei 80° im Vakuumtrockenschrank. Man erhält 9,7 Teile eines roten Pigmentes, welches, als Pulver in Lacke eingefärbt, eine gegenüber dem Ausgangsprodukt farbstärkere Färbung mit höherem Glanz und guten Echtheiten ergibt.

Beispiel 19

10 Teile des nach dem Verfahren gemäss CH-PS 359 498 erhaltenen rohen C.I. Pigmentgelb 93 werden zusammen mit 3,5 Teilen ca. 100 %-igem Aetznatron in Pillenform durch Verrühren während ca. zwei Stunden bei ca. 40° in 120 Vol.-Teilen Aethylenglykolmonomethyläther vollständig aufgelöst. In die gelbe Lösung leitet man danach Chlorwasserstoffgas ein, bis das Pigment ausfällt und die Pigmentsuspension schwach sauer ist. Die saure, gelbe Pigmentsuspension wird auf Rückflusstemperatur erwärmt und während 45 Minuten bei Rückfluss gerührt. Man filtriert ab, wäscht den Presskuchen zuerst mit 150 Vol.-Teilen Aethylenglykolmonomethyläther, dann mit Wasser salzfrei und trocknet ihn bei 80° im Vakuumtrockenschrank. Man erhält 9,8 Teile eines Pigments, welches, eingefärbt in Weich-PVC-Walzfolien, gegenüber dem Ausgangsprodukt farbstärkere, reine und hochtransparente Gelbfärbungen ergibt. Elektronenmikroskopische Untersuchungen ergaben für das ausgefällte Pigment kleinere Pigmentkristalle.

Beispiel 20

10 Teile des nach dem Verfahren gemäss CH-PS 297 020 erhaltenen rohen C.I. Pigmentrots 166 und 2,8 Teile Lithiumhydroxidmonohydrat werden unter Rühren zu 120 Vol.-Teilen Aethylenglykolmonomethyläther gegeben. Man rührt während 2 1/2 Stunden bei Raumtemperatur, wobei das Pigmentsalz teilweise ausfällt. Dann wird innert ca. 10 Minuten kontinuierlich Chlorwasserstoffgas eingeleitet, bis das Pigment ausgefallen ist, und die Suspension sauer ist. Die Pigmentsuspension wird nun während 2 Stunden bei Rückflusstemperatur gerührt und anschliessend bei 70-90° filtriert. Der Presskuchen wird zuerst mit 200 Vol.-Teilen Aethylenglykolmonomethyläther, dann mit Wasser salzfrei gewaschen, bei ca. 80° im Vakuum getrocknet und pulverisiert. Man erhält ein Pigment, welches, eingefärbt in Weich-PVC-Walzfolien, gegenüber der Ausgangsware eine wesentlich farbstärkere, reinere und transparentere Färbung mit guten Echtheiten ergibt.

Beispiel 21

10 Teile des nach dem Verfahren gemäss CH-PS 297 020 erhaltenen rohen C.I. Pigmentrots 144 und 2 Teile ca. 100 %-iges Aetznatron in Pillenform werden in 120 Vol.-Teilen Aethylenglykolmonomethyläther während ca. zwei Stunden bei Raumtemperatur verrührt, wobei sich das Pigment und das Aetznatron vollständig im Lösungsmittel auflösen. Durch Zutropfen von 35 Vol.-Teilen 5 %-iger wässriger Salzsäure wird das Pigment ausgefällt und die Pigmentsuspension sauer gestellt. Die saure Pigmentsuspension wird in einem Autoklaven während 5 Stunden bei 170-180° verrührt, bei ca. 70° abfiltriert, der

Presskuchen mit 150 Vol.-Teilen Aethylenglykolmonomethyläther, dann mit Wasser salzfrei gewaschen, im Vakuumtrockenschrank bei ca. 80° getrocknet und pulverisiert. Man erhält 9,5 Teile eines Pigments, welches im Vergleich zur Ausgangsware beim Einfärben in Weich-PVC-Walzfolien wesentlich farbstärkere, transparente Färbungen mit guten Echtheiten ergibt.

Beispiel 22

Verfährt man analog wie in Beispiel 1 beschrieben, verwendet jedoch anstelle von 6 Teilen Aetznatron 23 Teile Triäthanolamin, so erhält man ein Pigment mit ebensoguten Eigenschaften.

Beispiel 23

Verfährt man analog wie in Beispiel 19 beschrieben, verwendet jedoch anstelle von C.I. Pigmentgelb 93 C.I. Pigmentgelb 94, so erhält man 9,8 Teile eines Pigments, welches, eingefärbt in Weich-PVC-Walzfolien, gegenüber dem Ausgangsprodukt farbstärkere, reinere und hochtransparente Gelbfärbungen ergibt. Mischfärbungen mit Titanweiss ergeben für das umgefällte, gegenüber der Ausgangsform feinkristallinere Pigment zudem bessere Lichtechtheiten.

Beispiel 24

In einem Kneter, dessen Mantelheizung auf 120° geheizt wird, werden 78 Teile des AC-Polyäthylen 7A®, Erweichungspunkt 90°, der Firma Allied Chemical, gegeben und geschmolzen. In der Schmelze werden 52 Teile des nach Beispiel 1 umgefällten C.I. Pigmentrots 144 in Form eines 24 % Pigment enthaltenden wässrigen Presskuchens in mehreren Portionen eingetragen. Man knetet solange, bis das Pigment vollständig von der Trägerschmelze aufgenommen und das Wasser praktisch farblos abgeschieden ist (im Laborkneter 15-30 Min.). Nun wird in Gegenwart des Wassers der laufende Kneter gekühlt, wobei nach kurzer Zeit ein feuchtes Granulat entsteht, das ausgeladen und getrocknet wird. Das erhaltene Präparat hat einen Pigmentgehalt von 40 % und ergibt beim Applizieren in Polyaethylen- und Polypropylen-Kunststoffen sehr farbstarke, reine Rotfärbungen mit guten Echtheiten.

Beispiel 25

Eine Mischung von 1,0 Teil des nach Beispiel 1 erhaltenen umgefällten Pigmentes, 1,0 Teil Antioxydans IRGANOX 1010® (CIBA-GEIGY AG) und 1 000,0 Teilen Polyäthylen-HD Granulat Vestolen A 60-16® (der Firma Hüls) wird während 15 Minuten in einer Glasflasche auf einer Rollbank vorgemischt. Danach wird die Mischung in zwei Passagen auf einem Einwellenextruder extrudiert, das so erhaltene Granulat auf einer Spritzgussmaschine (Allround Aarburg 200) bei 200° zu Platten verspritzt und während 5 Minuten bei 180° nachgepresst. Die Pressplatten weisen farbstarke rote Nuancen mit ausgezeichneten Echtheiten auf.

Beispiel 26

Für die Färbung von PVC wird eine Mischung von 65 Teilen stabilisiertem PVC, 35 Teilen Dioctylphthalat, 0,2 Teilen des nach Beispiel 23 erhaltenen umgefällten Pigmentes hergestellt und zwischen zwei Rollen eines Kalanders bei ca. 150° während 5 Minuten hin- und herbewegt. Die so erhaltene Weich-PVC-Folie weist eine transparente, reine, gelbe Färbung mit ausgezeichneten Lichtechtheiten auf.

Beispiel 27

Eine Mischung von 130 Teilen Steatitkugeln von 8 mm Durchmesser, 47,5 Teilen Alkydmelamineinbrennlack, bestehend aus 60 Teilen Beckosol 27-320®, 60 % in Xylol (Reichhold Chemie AG), 36 Teilen Super-Beckamin 13-501®, 50 % in Xylol/Butanol 1 : 1 (Reichhold Chemie AG), 2 Teilen Xylol und 2 Teilen Aethylenglykolmonomethyläther, und 2,5 Teilen des nach Beispiel 1 erhaltenen umgefällten Pigmentes wird in einer 200 ml Glasflasche mit Twist-off-Verschluss während 120 Stunden auf einem Rollgestell dispergiert. Nach Abtrennen der Steatitkugeln werden 2,4 Teile der so dispergierten Volltonmischung, 6,0 Teile Titandioxid Kronos RN 59® (Kronos Titan GmbH) mit 24,0 Teilen des obigen Alkydmelamineinbrennlacks vermischt, auf Aluminiumbleche gespritzt und anschliessend während 30 Minuten bei 130° eingebrannt. Man erhält rote Färbungen mit ausgezeichneten Echtheiten.

**Ansprüche**

1. Verfahren zur Konditionierung von Mono- oder Disazopigmenten der β-Hydroxynaphthoesäurearylid-, Acetoacetarylid- und der heterocyclischen Reihe durch alkalische Umfällung, dadurch gekennzeichnet, dass man das Rohpigment in einem polaren organischen Lösungsmittel oder in einem Gemisch von solchen Lösungsmitteln durch Zugabe einer Base in ein Pigmentsalz überführt, das Azopigment durch Zugabe einer Säure wieder ausfällt, danach die saure Pigmentsuspension unter Rühren erwärmt und das erhaltene kristalline Pigment isoliert.

2. Verfahren gemäss Anspruch 1, dadurch gekennzeichnet, dass das Pigmentsalz nach Zugabe der Base in gelöstem Zustand vorliegt.

3. Verfahren gemäss Anspruch 1, dadurch gekennzeichnet, dass man von Disazopigmenten der β-Hydroxynaphthoesäurearylidreihe ausgeht.

4. Verfahren gemäss Anspruch 1, dadurch gekennzeichnet, dass man von Disazopigmenten der Acetessigsäurearylidreihe ausgeht.

5. Verfahren gemäss Anspruch 1, dadurch gekennzeichnet, dass man die Konditionierung in einem Mono- oder Diäthylenglykol-monoalkyläther, einem Amid, einem Keton, einem Alkohol oder in einem Gemisch der genannten Lösungsmittel ausführt.

6. Verfahren gemäss Anspruch 5, dadurch gekennzeichnet, dass man die Konditionierung in Aethylenglykol-monomethyläther oder Aethylenglykol-monoäthyläther ausführt.

7. Verfahren gemäss Anspruch 1, dadurch gekennzeichnet, dass man als Base ein Alkalihydroxid oder Alkalialkoholat mit 1-4 C-Atomen, Ammoniak oder eine organische Base verwendet.

8. Verfahren gemäss Anspruch 7, dadurch gekennzeichnet, dass man Natrium- oder Kaliumhydroxid verwendet.

9. Verfahren gemäss Anspruch 1, dadurch gekennzeichnet, dass man als Säure gasförmigen Halogenwasserstoff, verdünnte oder konzentrierte Salzsäure oder wässrige Schwefelsäure oder eine Mono- oder Dicarbonsäure verwendet.

10. Verfahren gemäss Anspruch 9, dadurch gekennzeichnet, dass man als Säure Chlorwasserstoffgas verwendet.

11. Verwendung der nach dem Verfahren gemäss Anspruch 1 umgefällten Pigmente zum Färben von hochmolekularem organischem Material.

**Claims**

1. A process for conditioning a mono- or disazo pigment of the p-hydroxynaphthoic acid arylide series, of the acetoacetarylide series and of the heterocyclic series by alkaline reprecipitation, which comprises converting the crude pigment, in a polar organic solvent or in a mixture of such solvents, to a pigment salt by adding a base, reprecipitating the azo pigment by adding an acid, then heating the acidic pigment suspension, with stirring, and isolating the crystalline pigment obtained.

2. A process according to claim 1, wherein the pigment salt is in solution after addition of the base.

3. A process according to claim 1, wherein the starting pigment is a disazo pigment of the β-hydroxynaphthoic acid arylide series.

4. A process according to claim 1, wherein the starting pigment is a disazo pigment of the acetoacetic acid arylide series.

5. A process according to claim 1, wherein the conditioning is carried out in a monoethylene glycol monoalkyl ether, diethylene glycol monoalkyl ether, amide, ketone or alcohol or in a mixture of these solvents.

6. A process according to claim 5, wherein the conditioning is carried out in ethylene glycol monomethyl ether or ethylene glycol monoethyl ether.

7. A process according to claim 1, wherein the base used is an alkali metal hydroxide, an alkali metal alcoholate having 1-4 C atoms, ammonia or an organic base.

8. A process according to claim 7, wherein sodium hydroxide or potassium hydroxide is used.

9. A process according to claim 1, wherein the acid used is a gaseous hydrogen halide, dilute or concentrated hydrochloric acid or aqueous sulfuric acid or a monocarboxylic or dicarboxylic acid.

10. A process according to claim 9, wherein the acid used is hydrogen chloride gas.

11. Use of a pigment, which has been reprecipitated by the process according to claim 1, for colouring highmolecular organic material.

**Revendications**

1. Procédé pour conditionner des pigments monoazoïques ou disazoïques appartenant aux séries des arylides d'acides β-hydroxynaphtoïques, des acétoacétylarylides et des pigments hétérocycliques, par reprécipitation alcaline, procédé caractérisé en ce qu'on transforme le pigment brut, dans un solvant organique polaire ou dans un mélange de tels solvants, par addition d'une base, en un pigment sel, on fait reprécipiter le pigment azoïque par addition d'un acide, puis on chauffe la suspension acide du pigment tout en agitant et on isole le pigment cristallisé obtenu.

2. Procédé selon la revendication 1, caractérisé en ce que le pigment sel, après l'addition de la base, est à l'état dissous.

3. Procédé selon la revendication 1, caractérisé en ce qu'on part de pigments disazoïques de la série des arylides β-hydroxynaphtoïques.

4. Procédé selon la revendication 1, caractérisé en ce qu'on part de pigments disazoïques de la série des arylides de l'acide acétylacétique.

5. Procédé selon la revendication 1, caractérisé en ce qu'on effectue le conditionnement dans un éther monoalkylique du monoéthylène-glycol ou du diéthylène-glycol, un amide, une cétone, un alcool ou dans un mélange des solvants cités.

6. Procédé selon la revendication 5, caractérisé en ce qu'on effectue le conditionnement dans l'éther monométhylique de l'éthylène-glycol ou dans l'éther monoéthylique de l'éthylène-glycol.

7. Procédé selon la revendication 1, caractérisé en ce qu'on utilise, comme base, un hydroxyde de métal alcalin ou un alcoolate de métal alcalin contenant de 1 à 4 atomes de carbone, l'ammoniac ou une base organique.

8. Procédé selon la revendication 7, caractérisé en ce qu'on utilise l'hydroxyde de sodium ou l'hydroxyde de potassium.

9. Procédé selon la revendication 1, caractérisé en ce qu'on utilise, comme acide, un halogénure d'hydrogène gazeux, un acide chlorhydrique dilué ou concentré, un acide sulfurique aqueux ou un acide monocarboxylique ou dicarboxylique.

10. Procédé selon la revendication 9, caractérisé en ce qu'on utilise, comme acide, le gaz chlorhydrique.

11. Application des pigments reprécipités qui ont été obtenus par le procédé de la revendication 1 à la teinture de matières organiques à haut poids moléculaire.